# EUROPÄISCHE PATENTANMELDUNG

(11) **EP 1 075 065 A1**
(43) Veröffentlichungstag der Anmeldung: **07.02.2001**
(21) Anmeldenummer: 00115292.5
(22) Anmeldetag: 14.07.2000
(51) Int. Cl.: H02B 1/056

(54) **Installationsverteileranordnung**

(30) Priorität: 31.07.1999 DE 19936149
(71) Anmelder: ABB PATENT GmbH, 68309 Mannheim (DE)
(72) Erfinder: Werner, Karl Thomas, Dipl.-Ing., 68753 Waghäusel-Wiesental (DE); Eppe, Klaus-Peter, Dipl.-Ing., 69529 Waldbrunn (DE); Wieland, Ralf, Dipl.-Ing., 69429 Waldbrunn (DE); Schmitt, Volker, 69245 Bammental (DE)
(74) Vertreter: Miller, Toivo

(57) **Zusammenfassung**

Es wird eine Installationsverteileranordnung mit Leitungsschutzschaltern (10), Fehlerstromschutzschaltern, die auf einem Isoliergehäuse (16) aneinander aufgereiht befestigbar sind beschrieben, in dem Sammelschienen (19) untergebracht sind. An der Befestigungsseite der Sammelschienen (19) sind Kontaktelemente (18) angebracht, die mit den Sammelschienen (19) durch Stecktechnik in Verbindung bringbar sind. Am Befestigungsboden und am Isoliergehäuse sind Mittel (20, 21, 22) zur Erzielung einer Unverwechselbarkeit beim Aufstecken vorgesehen sind.

## Beschreibung

Die Erfindung betrifft eine Installationsverteileranordnung nach dem Oberbegriff des Anspruches 1.

Eine derartige Installationsverteileranordnung ist aus der DE 196 28 957.2 bekannt geworden. Diese umfaßt ein Isoliergehäuse, in dem Sammelschienen untergebracht sind und an dem Leitungsschutz-, Fehlerstromschutz- und andere elektrische Schaltgeräte befestigt werden können. An den Befestigungsseiten der einzelnen Schaltgeräte befinden sich herausgeführte Steckerstifte, die mit den Sammelschienen in Stecktechnik in Verbindung bringbar sind. Am Isoliergehäuse befinden sich Ausnehmungen und am Schaltgerät Nasen oder Vorsprünge, die in die Ausnehmungen beim Aufschnappen eingreifen. Diese Ausnehmungen bzw. Nasen dienen lediglich der Führung der einzelnen Schaltgeräte, sodaß sichergestellt ist, daß die Steckelemente in die entsprechenden Aufnahmeöffnungen an den Sammelschienen eingesteckt werden können.

Aufgabe der Erfindung ist es, eine Installationsverteileranordnung zu schaffen, bei der sichergestellt ist, daß bestimmte Schaltgeräte auch an dafür vorbestimmten Plätzen eingebaut werden können.

Diese Aufgabe wird erfindungsgemäß durch die Merkmale des Anspruches 1 gelöst.

Erfindungsgemäß befinden sich an der Besfestigungsseite und am Isoliergehäuse Mittel zur Erzielung einer Unverwechselbarkeit beim Aufstecken.

Diese Mittel können als Zapfen am Schaltgerät und Öffnungen am Isoliergehäuse bzw. umgekehrt ausgebildet sein, wobei bestimmte Schaltgeräte einen Zapfen mit einem bestimmten Durchmesser besitzen, der nur in seine zugehörige und passende Öffnung einfügbar ist, wogegen andere Schaltgräte einen Zapfen mit einem anderen Durchmesser besitzen, der in seine zugehörige und passende Öffnung einfügbar ist, dergestalt, daß ein Schaltgerät nur an der dafür gedachten Stelle am Isoliergehäuse montierbar ist.

Anhand der Zeichnung, in der ein Ausführungsbeispiel der Erfindung dargestellt ist, sollen die Erfindung sowie weitere vorteilhafte Ausgestaltungen und Verbesserungen der Erfindung näher erläutert und beschrieben werden.

Es zeigen:
- Fig. 1: eine schematische Darstellung eines Schaltgerätes, in perspektivischer Ansicht auf die Befestigungsfläche,
- Fig. 2: eine Aufsicht auf ein Isoliergehäuse mit aufgestecktem Schaltgeät, und
- Fig. 3: eine Schnittansicht gemäß Schnittlinie III - III der Fig. 2.

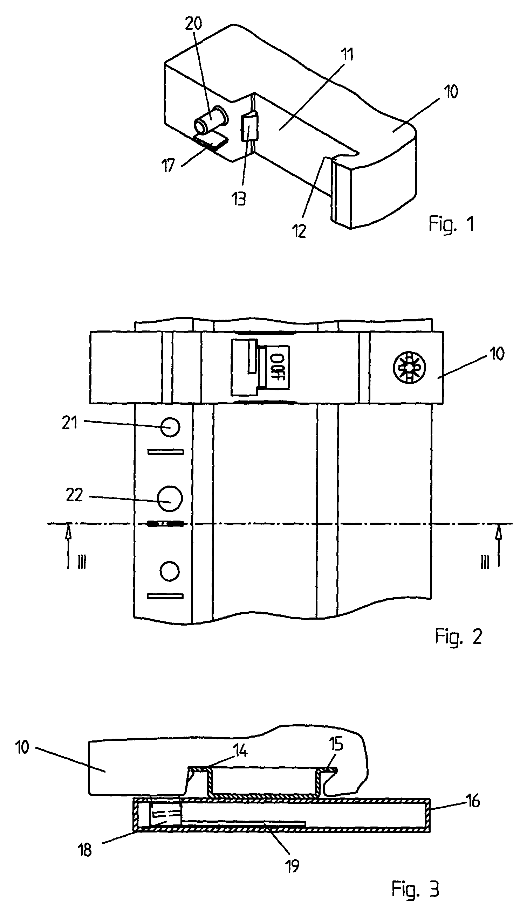

Die Fig. 1 zeigt die Unterseite eines Installationsschaltgerätes 10, das an seiner Befestigungsseite eine Ausnehmung 11 aufweist, an der eine feststehende Nase 12 und eine bewegbare Nase 13 angeordnet sind, die aufeinander zuweisen und die hinter hutprofilartige Anformungen 14 und 15 eines Isoliergehäuses 16 eingeschnappt werden können.

Auf der Besfestigungsfläche ragt ein fahnenartiger Steckerstift 17 heraus, der nach Montage mit Anschlußkontaktelementen 18 von Sammelschienen 19 im Isoliergehäuse 16 kontaktierbar ist. Neben der Fahne 17 befindet sich ein senkrecht zur Befestigungsfläche vorspringender Zapfen 20, der im montierten Zustand in Ausnehmungen 21, 22 eingesteckt werden kann.

Dabei ist der Zapfen 20 an die Ausnehmung 21 oder an die Ausnehmung 22 angepaßt, je nachdem, um welche Art eines Schaltgerätes es sich beim dem Schaltgerät 10 handelt.

## Patentansprüche

1. Installationsverteileranordnung mit Leitungsschutzschaltern, Fehlerstromschutzschaltern, die auf einem Isoliergehäuse aneinander aufgereiht befestigbar sind, in dem Sammelschienen untergebracht sind, mit an der Befestigungsseite angebrachten Kontaktelementen, die mit den Sammelschienen durch Stecktechnik in Verbindung bringbar sind, dadurch gekennzeichnet, daß am Befestigungsboden und am Isoliergehäuse Mittel zur Erzielung einer Unverwechselbarkeit beim Aufstecken vorgesehen sind.

2. Installationsverteileranordnung nach Anspruch 1, dadurch gekennzeichnet, daß die Mittel Zapfen am Schaltgerät und Öffnungen am Isoliergehäuse bzw. umgekehrt sind, und daß bestimmte Schaltgeräte, z. B. Fehlerstromschutzschalter einen Zapfen bzw. eine Öffnung mit einem ersten Durchmesser besitzen, wobei zugehörige Zapfen nur in ihre zugehörige und passende Öffnung einfügbar sind, wogegen andere Geräte, z. B. Leitungsschutzschalter, einen Zapfen oder eine Öffnung mit einem zweiten Durchmesser besitzen, der in seine zugehörige passende Öffnung bzw. Zapfen einfügbar ist, dergestalt, daß ein Schaltgerät einer bestimmten Art nur an der dafür gedachten Stelle am Isoliergehäuse montierbar ist.
